(19) Europäisches Patentamt
European Patent Office
Office européen des brevets

(11) **EP 2 903 582 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(21) Anmeldenummer: **13802225.6**

(22) Anmeldetag: **02.10.2013**

(51) Int Cl.:
*A61H 19/00* *(2006.01)*     *A61H 23/02* *(2006.01)*

(86) Internationale Anmeldenummer:
**PCT/DE2013/100348**

(87) Internationale Veröffentlichungsnummer:
**WO 2014/053122 (10.04.2014 Gazette 2014/15)**

(54) **STEUERANORDNUNG ZUR STEUERUNG DER INTENSITÄT DER MASSAGEBEWEGUNG EINES MASSAGEGERÄTES SOWIE MASSAGEGERÄT MIT EINER SOLCHEN STEUERANORDNUNG**

CONTROL ASSEMBLY FOR CONTROLLING THE INTENSITY OF THE MASSAGING MOTION OF A MASSAGE DEVICE, AND MASSAGE DEVICE COMPRISING A CONTROL ASSEMBLY OF THIS TYPE

DISPOSITIF DE COMMANDE DE L'INTENSITÉ DU MOUVEMENT DE MASSAGE D'UN APPAREIL DE MASSAGE, ET APPAREIL DE MASSAGE DOTÉ D'UN TEL DISPOSITIF DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2012 DE 102012109371**

(43) Veröffentlichungstag der Anmeldung:
**12.08.2015 Patentblatt 2015/33**

(73) Patentinhaber: **Knyrim, Jörg**
**76133 Karlsruhe (DE)**

(72) Erfinder: **Knyrim, Jörg**
**76133 Karlsruhe (DE)**

(74) Vertreter: **Glück Kritzenberger Patentanwälte PartGmbB**
**Hermann-Köhl-Strasse 2a**
**93049 Regensburg (DE)**

(56) Entgegenhaltungen:
**EP-A1- 2 364 687     DE-A1- 4 426 446**
**DE-U1- 20 005 475     US-A1- 2009 306 467**

**Beschreibung**

Die Erfindung betrifft ein Massagegerät mit einer Steueranordnung zur Steuerung der Intensität der Massagebewegung.

Massagegeräte zur sexuellen Stimulation eines weiblichen oder männlichen Geschlechtsteils oder zum Training des Beckenbodens sind hinreichend aus dem Stand der Technik bekannt. Insbesondere sind Massagegeräte bekannt, die in Körperhöhlen einführbar sind und einem männlichem Glied nachempfunden sind. Diese sind vorzugsweise stabförmig ausgebildet und weisen einen Kopfteil mit zumindest einem Massageabschnitt auf, in dem eine Massagebewegung zur sexuellen Stimulation des weiblichen Geschlechtsteils erzeugt wird. Ferner umfassen derartige Massagegeräte zumindest eine vorzugsweise elektrische betriebene Antriebseinheit zur Erzeugung der Massagebewegung im Massageabschnitt des Kopfteils.

Auch sind Massagegeräte zur sexuellen Stimulation des männlichen Geschlechtsteils, insbesondere eines menschlichen Penis bekannt. Ziel derartiger Massagegeräte ist es das männliche Geschlechtsteil mit entsprechenden Vibrationen zu beaufschlagen und hierdurch eine Erregung des männlichen Geschlechtsteils zu erreichen. Vorzugsweise bilden derartige Massagegeräte einen Körperhöhlen nachbildenden Aufnahmeraum auf, dessen umgebende Wandung mittels entsprechender Massagebewegungen das im Aufnahmeraum aufgenommene männliche Geschlechtsteils beaufschlagt.

Genannte Massagegeräte weisen häufig elektrisch betriebene Antriebseinheiten, vorzugsweise Elektromotoreinheiten auf, die über eine im Massagegerät vorgesehene Energieversorgungseinheit, insbesondere eine Batterie- oder Akkueinheit mit elektrischer Energie versorgt werden. Bekanntermaßen ist die elektrische Leistung einer derartigen Elektromotoreinheit von der Versorgungsspannung und der Stromaufnahme abhängig, wobei bei einer mechanischen Belastung der Elektromotoreinheit bei gleichbleibender Versorgungsspannung die Stromaufnahme und damit die elektrische Leistungsaufnahme ansteigen. Die mechanische Leistung einer Elektromotoreinheit ist aufgrund der Umsetzungsverluste von elektrischer Energie in mechanische Energie, insbesondere den hierbei auftretenden Reibungsverlusten immer geringer als die zugeführte elektrische Leistung, wobei die mechanische Leistung durch das Drehmoment und die Drehzahl bestimmt sind. Die während des Massageprozess auf die Antriebwelle der Elektromotoreinheit einwirkenden mechanischen Kräfte führen zu einer Erhöhung der elektrischen Leistungsaufnahme und zu einer Erhöhung der Stromaufnahme der Elektromotoreinheit, wodurch bei üblicherweise gleichbleibender Betriebsspannung die erzeugte mechanische Leistung abnimmt und damit die Massagebewegung nachteilig an Intensität verliert.

Aus der europäischen Patentanmeldung EP 2 364 687A1 ist beispielsweise ein Massagegerät zur sexuellen Stimulation des weiblichen Geschlechtsteils bekannt, welches eine Hauptvibratoreinheit und eine Hilfsvibratoreinheit aufweist, bei der die Intensität zumindest eines der Vibratoreneinheiten abhängig von der Eindringtiefe des Massagegerätes in die menschliche Körperhöhle gesteuert wird. Hierzu sind entlang der Längsachse des stabförmig ausgebildeten Massagegerätes mehrere Sensorelemente beabstandet voneinander angeordnet, welche bei Vorliegen eines Kontaktes der Wandung des Massagekopfabschnittes des Massagegerätes mit der diese umgebenden Körperhöhle ein Sensorsignal liefern, wobei die Leistung einer der eine Elektromotoreinheit aufweisenden Vibratoreneinheiten abhängig von der Anzahl der vorliegenden Sensorsignale, d.h. der Eindringtiefe des Massagegerätes in die Körperhöhle gesteuert wird.

Ferner wird in der US 2009/0306467 A1 ein Verfahren und eine zugehörige Vorrichtung beschrieben, um eine Erektion des männlichen Gliedes zu bewirken bzw. aufrechtzuerhalten. Hierzu ist Vorrichung als "Vibrator" ausgebildet, welcher ein Gehäuse aufweist, in dem eine Elektromotoreinheit aufgenommen ist, die über eine Antriebsmechanik mit einem im Querschnitt pilzförmigen Vibrationselement verbunden ist. Das pilzförmige Vibrationselement bildet eine kreisförmige Anlagefläche für das zu massierende männliche Glied aus. Ferner ist eine elektronische Steuerschaltung zur Ansteuerung der Elektromotoreinheit im Gehäuse aufgenommen, über welche u.a. ein vorgegebene Vibrationsfrequenz geregelt wird. Nachteilig ermöglicht die Vorrichtung keine benutzerindividuelle Steuerung der Intensität der Vibrationsbewegung.

Aus der DE 200 050 475 U1 ist ein Massagegerät mit einem in ein Gehäuse integrierten Motor bekannt, bei dem mittels einer Welle die Motorbewegung auf einen aufsteckbaren Behandlungskopf übertragbar ist. Das Massagegerät weist ferner Mittel zur Messung der Drehzahl des Motors und einer entsprechenden Regelung dessen auf.

Die EP 2 364 687 A1 betrifft ein interaktives Massagegerät, welches über eine Vielzahl von Näherungssensoreinheiten verfügt, die entlang der Massagefläche verteilt angeordnet sind. Abhängig von den von den Näherungssensoreinheiten erfassten Messwerten wird das Vibrationsverhalten des Massagegerätes gesteuert, und zwar bei Erfassen eines Körperkontaktes die Vibrationsbewegung angeschaltet und bei einem fehlenden Kontakt zum Körper wieder ausgeschaltet.

Ausgehend davon liegt der Erfindung die Aufgabe zugrunde, ein Massagegerät mit einer Steueranordnung zur Steuerung der Intensität der Massagebewegung eines Massagegerätes anzugeben, welches die Nachteile des Standes der Technik beseitigt, und insbesondere eine von der bei der Massage entstehenden direkten oder indirekten mechanischen Krafteinwirkung auf die Antriebswelle der Elektromotoreinheit abhängigen Steuerung der Intensität der Massagebewegung zu ermöglichen. Die Aufgabe wird durch die Merkmale des Patentanspruches 1 gelöst.

Der wesentliche Aspekt des erfindungsgemäßen Massagegerät mit einer Steueranordnung ist darin zu sehen, dass die Steueranordnung ausgelegt ist, als Massagebewegung die Intensität der Bewegung und/oder Verformung und/oder Vibration der in direkten oder indirekten Wirkverbindung mit der Elektromotoreinheit stehenden Wandung die aktuelle elektrische Leistungsaufnahme der zumindest einen Elektromotoreinheit periodisch oder kontinuierlich zu ermitteln und die ermittelte elektrische Leistungsaufnahme mit zumindest einer vorgegebenen Referenzleistungsaufnahme zu vergleichen und abhängig vom Vergleichsergebnis die Intensität der Massagebewegung zu steuern, wobei hierbei ausgehend von einer Grundintensität entsprechend dem aktuellen Massageverhalten des Benutzers die Intensität der Massagebewegung erhöht oder erniedrigt wird, und zwar stufenartig oder kontinuierlich. Besonders vorteilhaft wird beim erfindungsgemäßen Massagegerät bei einer Belastung der Elektromotoreinheit des Massagegerätes durch den vom Benutzer auf das Massagegerät ausgeübten Druck, und zwar auf dessen Wandung - sei es durch Erhöhung des Anpressdruckes und/oder die Erhöhung der Eindringtiefe bedingt - eine Steuerung der Intensität der Massagebewegung möglich. Besonders vorteilhaft kann der Nutzer damit die Intensität des Massagegerätes bzw. der von diesem erzeugten Massagebewegung an die benutzerindividuellen Massagebedürfnisse anpassen und damit nach seinen persönlichen Bedürfnissen die sexuelle Stimulation der Geschlechtsorgane beeinflussen.

In einer besonders vorteilhaften Ausführungsvariante Erfindungsgemäß wird die Änderung der elektrischen Leistungsaufnahme, die durch die bei der Massage entstehende direkte oder indirekte mechanische Krafteinwirkung auf die Elektromotoreinheit hervorgerufen wird, zur Bestimmung der Änderung der Intensität der Massagebewegung ausgewertet.

Weiterhin vorteilhaft wird als Betriebsparameter die Amplitude einer durch eine Gleichspannung gebildeten Betriebsspannung der Elektromotoreinheit erhöht oder erniedrigt. Alternativ hierzu wird als Betriebsparameter das An- zu Ausverhältnis einer pulsweitenmodulierten Betriebsspannung der Elektromotoreinheit geändert.

Weiterhin vorteilhaft wird zur Steuerung der Intensität der Massagebewegung abhängig vom Vergleichsergebnis der ermittelten elektrischen Leistungsaufnahme mit der zumindest einen vorgegebenen Referenzleistungsaufnahme zumindest ein Betriebsparameter der zumindest einen Elektromotoreinheit geändert. Bevorzugt wird als Betriebsparameter die Betriebsspannung der Elektromotoreinheit erhöht oder erniedrigt.

Erfindungsgemäß wird als Massagebewegung die Intensität der Bewegung und/oder Verformung und/oder Vibration der in direkter oder indirekter Wirkverbindung mit der Elektromotoreinheit stehenden Wandung gesteuert.

Vorteilhaft wird zur Ermittlung der aktuellen elektrischen Leistungsaufnahme die aktuelle Stromaufnahme der Elektromotoreinheit ermittelt. Alternativ kann zur Ermittlung der aktuellen elektrischen Leistungsaufnahme der effektive Innenwiderstand der Elektromotoreinheit ermittelt und ausgewertet wird. Zur Ermittlung der aktuellen elektrischen Leistungsaufnahme kann auch die Drehzahl der Elektromotoreinheit ermittelt und ausgewertet werden. Bevorzugt wird die Drehzahl der Elektromotoreinheit über eine in Wirkverbindung mit der Elektromotoreinheit stehende Drehzahlsensoreinheit ermittelt.

Ebenso kann zur Ermittlung der aktuellen elektrischen Leistungsaufnahme beim Betrieb der Elektromotoreinheit mittels einer pulsweitenmodulierten Betriebsspannung in den Auszeiten die von der Elektromotoreinheit erzeugte Gegenspannung ermittelt und zur Bestimmung der Drehzahl ausgewertet werden.

Ebenfalls kann abhängig vom Vergleichsergebnis die Elektromotoreinheit in einem der ermittelten elektrischen Leistungsaufnahme zugeordneten Betriebsmodus von mindestens zwei Betriebsmodi betrieben werden, wobei einem Betriebsmodus zumindest eine an diesen angepasste Referenzleistungsaufnahme zugeordnet ist Weiterhin vorteilhaft wird bei einer Energieversorgung des Massagegerätes mittels einer Batterieeinheit oder einer Akkueinheit der Spannungsabfall oder die aktuell bereitgestellte Spannung der Batterieeinheit oder der Akkueinheit zur Ermittlung der aktuellen Leistungsaufnahme der Elektromotoreinheit ausgewertet.

Vorteilhaft weist die Steueranordnung eine Verstärkerschaltung zur Steuerung der Intensität der Massagebewegung des Massagegerätes auf.

Weiterhin vorteilhaft kann die Steueranordnung zumindest eine vorzugsweise drahtlose Datenschnittstelle, beispielsweise eine Funkdatenschnittstelle zum Ausstauch von Betriebsdaten und zur davon abhängigen Steuerung der Intensität der Massagebewegung eines weiteren Massagegerätes aufweisen.

In einer Ausführungsvariante weist die Steueranordnung eine Mikrokontrollereinheit zur Ausführung einer Steuerroutine zur Steuerung der Intensität der Massagebewegung eines Massagegerätes auf.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Zudem ergeben sich Weiterbildungen, Vorteile und Anwendungsmöglichkeiten der Neuerung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Neuerung, unabhängig von ihrer Zusammenfassung in den Ansprüchen oder deren Rückbeziehung. Auch wird der Inhalt der Ansprüche zu einem Bestandteil der Beschreibung gemacht. Es zeigen:

Fig. 1    beispielhaft einen schematischen Längsschnitt durch ein als Aufliegevibrator ausgebildetes Massagegerät mit einer erfindungsgemäßen Steueranordnung,

Fig. 2    beispielhaft einen schematischen Längsschnitt durch ein stabförmiges Massagegerät zur Stimulation des weiblichen Geschlechtsteils mit einer erfindungsgemäßen Steueranordnung,

Fig. 3    beispielhaft einen schematischen Längsschnitt durch eine körperhöhlenartige Ausnehmung aufweisenden Massagegerätes zur Stimulation des männlichen Geschlechtsteils mit einer erfindungsgemäßen Steueranordnung,

Fig. 4    beispielhaft einen schematischen Längsschnitt durch eine alternative Ausführungsvariante eines eine körperhöhlenartige Ausnehmung aufweisenden Massagegerätes zur Stimulation des männlichen Geschlechtsteils mit einer erfindungsgemäßen Steueranordnung,

Fig. 5    beispielhaft ein schematisches Schaltbild einer Ausführungsform der Steueranordnung und

Fig. 6    beispielhaft ein schematisches Ablaufdiagramm einer Steuerroutine.

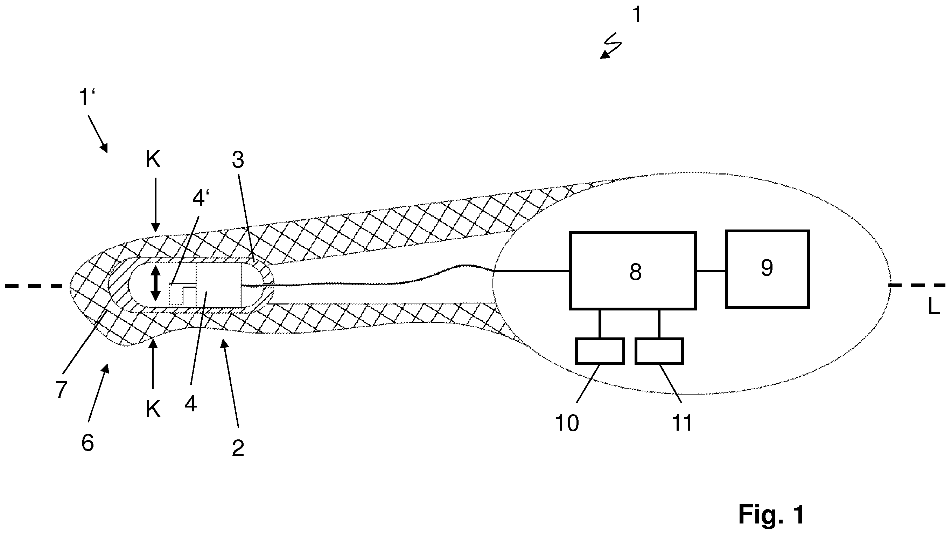

In den Figuren 1 - 4 sind unterschiedliche Ausführungsformen eines Massagegerätes 1 dargestellt.

So zeigt beispielsweise Figur 1 ein als Aufliegevibrator ausgebildetes Massagegerät 1. Zur Erzeugung einer Massagebewegung, insbesondere einer Vibrationsbewegung im Bereich des freien Endes 1' des Massagegerätes 1 ist eine Vibratoreinheit 2 vorgesehen, welche beispielhaft eine in einem Gehäuse 3 aufgenommene Elektromotoreinheit 4 mit Unwuchtelement 4' umfasst. Es versteht sich, dass die Erfindung keinesfalls auf diese Ausführungsform einer Vibratoreinheit 2 beschränkt ist, sondern auch diverse weitere Realisierungsformen einer Vibratoreinheit 2 mit Elektromotoreinheit 4 Verwendung finden können.

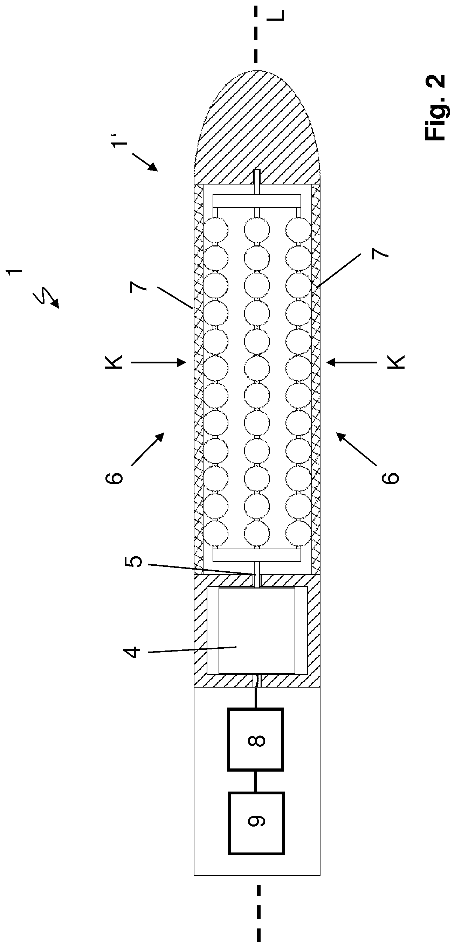

In Figur 2 ist beispielhaft ein stabförmiges Massagegerät 1 mit mehreren um die Längsachse L des Massagegerätes 1 rotierenden Kugelelementen dargestellt, wobei die Kugelelemente entlang mehrerer sich entlang der Längsachse L erstreckenden Haltestangenelementen aufgereiht sind. Die Haltestangenelemente verlaufen konzentrisch zur Längsachse L. Die genannte Antriebsvorrichtung wird durch eine Elektromotoreinheit 4 um eine achsgleich mit der Längsachse L verlaufende Drehachse angetrieben. Durch die Rotation der Kugelelemente um die Drehachse bzw. Längsachse L wird eine Massagebewegung erzeugt.

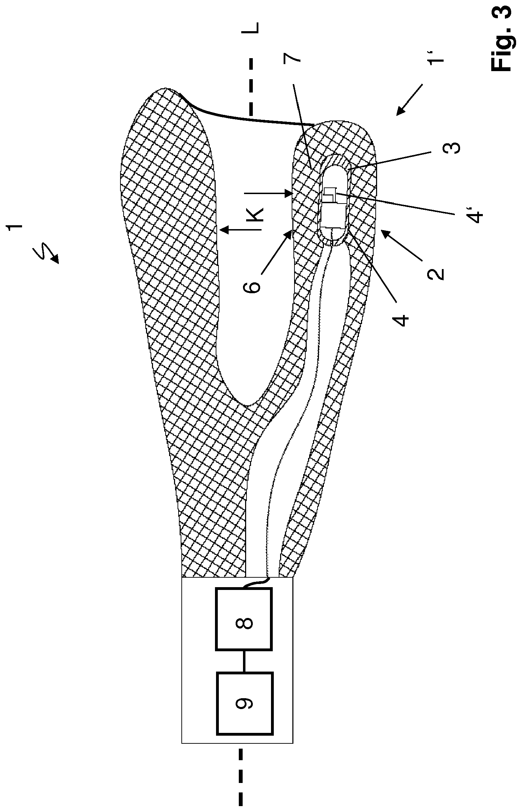

Figur 3 zeigt beispielhaft ein zur Stimulation des männlichen Geschlechtsteils ausgebildetes Massagegerät 1 mit einer zur Erzeugung einer Massagebewegung vorgesehenen Vibratoreinheit 2, die wiederum eine in einem Gehäuse 3 aufgenommene Elektromotoreinheit 4 mit Unwuchtelement 4' umfasst.

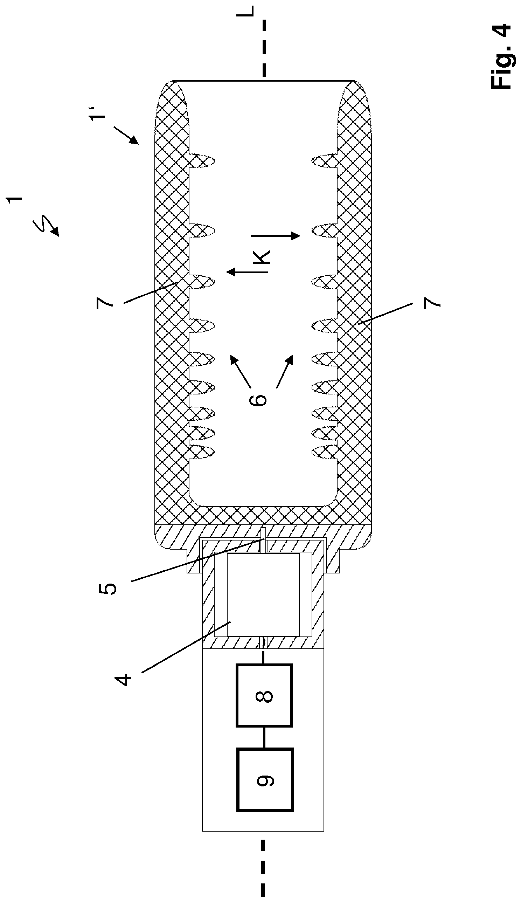

Figur 4 zeigt schließlich eine alternative Ausführungsform eines zur Stimulation des männlichen Geschlechtsteils ausgebildeten Massagegerätes 1 mit einer Elektromotoreinheit 4 mit einer Antriebswelle 5, welche eine um die Längsachse L des Massagegerätes 1 rotierende körperhöhlenartigen Aufnahmeraum aufweist.

Abhängig von der jeweiligen Ausführungsform des Massagegerätes 1 ist die Antriebseinheit in Form einer im Gehäuse 3 aufgenommenen Elektromotoreinheit 4 mit Unwuchtelement 4' zur Erzeugung einer Vibrationsbewegung des Gehäuses 3 oder einer Elektromotoreinheit 4 mit einer Antriebswelle 5 zum Antrieb einer Massagemechanik um die Längsachse L des Massagegerätes 1 zur Erzeugung einer Drehbewegung um die Längsachse L des Massagegerätes 1 ausgebildet.

Den Ausführungsvarianten in den Figuren 1 - 4 ist damit gemein, dass zumindest eine Elektromotoreinheit 4 zur Erzeugung einer Drehbewegung eines Unwuchtelementes 4' bzw. einer Antriebswelle 5 vorgesehen sind. Die Drehbewegung des Unwuchtelementes 4' bzw. der Antriebswelle 5 werden entweder direkt oder indirekt in eine Massagebewegung, insbesondere auch Vibrationsbewegung des Massagegerätes 1 umgewandelt. Hierzu umfasst das jeweilige Massagegerät 1 zumindest einen vorzugsweise länglichen Massageabschnitt 6, der zumindest eine die Außenfläche des Massageabschnittes 6 bildende Wandung 7 aufweist. Die Wandung 7 ist beispielsweise aus einem elastischen oder teilelastischen Material, beispielsweise Kunststoff- oder Schaumstoffmaterial gebildet.

Zur Erzeugung der Massagebewegung steht die Wandung 7 direkt oder indirekt mit der Vibratoreinheit 2 bzw. dem Gehäuse 3 der Vibratoreinheit 2 oder mit der Elektromotoreinheit 4 in Wirkverbindung. Die Elektromotoreinheit 4 ist jeweils über elektrische Leitungen mit einer Steueranordnung 8 verbunden, welche wiederum mit einer Energieversorgungseinheit 9 zur Bereitstellung einer Betriebsspannung U ausgebildet ist, die zum Betrieb der Elektromotoreinheit 4 vorgesehen ist und die vorzugsweise über die Steueranordnung 8 gesteuert wird.

Wie in Figur 1 dargestellt könnten zusätzlich Anzeigemittel 10 und/oder Schaltmittel 11 mit der Steueranordnung 8 verbunden sein. Die Anzeigemittel 10 können beispielsweise in Form einer Displayeinheit und/oder Leuchtmittel wie Leuchtdioden und/oder Lautsprecher gebildet sein, die den aktuellen Betriebzustand des Massagegerätes 1 und/oder die aktuell abgegebene Intensität der Massagebewegung visuell und/oder akustisch anzeigen. Mittels der Schaltmittel 11 ist ein An- und Ausschalten der Antriebseinheit an sich sowie ggf. die Auswahl unterschiedlicher Massageintensitäten und/oder die Auswahl durch die Steueranordnung 8 bereitgestellter Massageprogramme möglich.

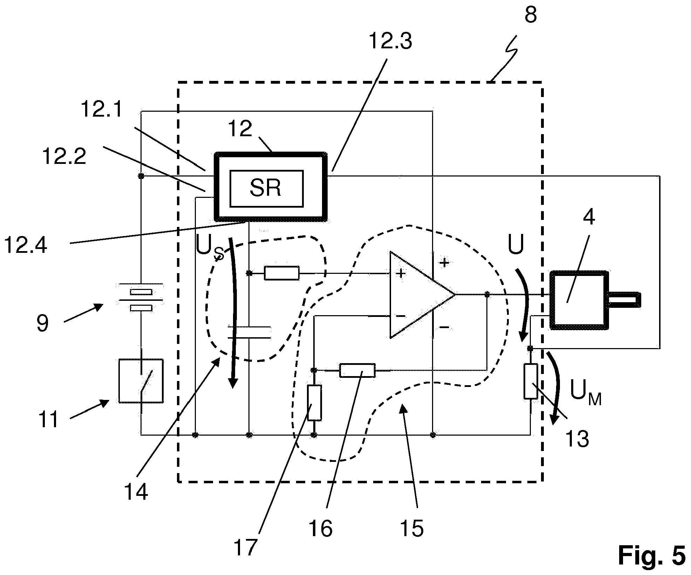

Die Steueranordnung 2 besteht abhängig von der Komplexität der Steuer- und/oder Regelaufgaben aus einer elektronischen Schaltung umfassend mehrere elektronische Bauteile wie zumindest eine Verstärkerschaltung 15 mit geeigneter Beschaltung. Ggf. kann eine Mikrokontrollereinheit 12 mit zugeordneter, insbesondere integrierter Speichereinheit vorgesehen sein. Fig. 5 zeigt beispielhaft den Schaltplan einer Ausführungsvariante der Steueranordnung 2.

Bei dem erfindungsgemäßen Verfahren zur Regelung der Intensität der Massagebewegung eines Massagegerätes 1 umfassend zumindest einen länglichen Massageabschnitt 6 mit zumindest einer die Außenfläche des Massageabschnittes 6 bildenden Wandung 7 und zumindest einer elektrischen Antriebseinrichtung mit einer Elektromotoreinheit 4 wird mittels der Steueranordnung 8 die aktuelle elektrische Leistungsaufnahme LA der zumindest einen Elektromotoreinheit 4 periodisch oder kontinuierlich ermittelt. Die ermittelte elektrische Leistungsaufnahme LA wird anschließend mit zumindest einer vorgegebenen Referenzleistungsaufnahme RLA verglichen und abhängig vom Vergleichsergebnis die Intensität der Massagebewegung gesteuert. Bevorzugt wird die Änderung der elektrischen Leistungsaufnahme LA, die durch die bei der Massage entstehende direkte oder indirekte mechanische Krafteinwirkung K auf die Elektromotoreinheit 4 hervorgerufen wird, zur Bestimmung der Änderung der Intensität der Massagebewegung ausgewertet. Die während der Massage durch den Benutzer erzeugte mechanische Krafteinwirkung K ist in den Figuren anhand von Pfeilen beispielhaft angedeutet. Diese bewirkt abhängig von dessen Amplitude eine Änderung der Belastung der Elektromotoreinheit 4, welche zu einer Änderung der elektrischen Leistungsaufnahme LA führt, die zur Steuerung der Intensität der Massagebewegung erfindungsgemäß ausgewertet wird.

Besonders bevorzugt wird zur Steuerung der Intensität der Massagebewegung des Massagegerätes 1 zumindest ein Betriebsparameter der zumindest einen Elektromotoreinheit 4 geändert, und zwar die zum Betrieb der Elektromotoreinheit 4 vorgesehene Betriebsspannung U. Durch beispielsweise eine Erhöhung der Betriebsspannung U der Elektromotoreinheit 4 kann die Intensität der Massagebewegung des Massagegerätes 1 erhöht werden und an die aktuellen Massagebedürfnisse angepasst werden. Entsprechend führt eine Reduzierung der Betriebsspannung U zu einer Verringerung der Intensität der Massagebewegung. Daraus resultiert eine deutlich verbesserte, insbesondere auf die jeweils aktuellen Massagebedürfnisse des Nutzers abgestimmte sexuelle Stimulation des jeweiligen Geschlechtsteils.

Die erfindungsgemäße Steuerung der Intensität der Massagebewegung eines Massagegerätes 1 beruht prinzipiell auf der Änderung der Leistungsbilanz der Elektromotoreinheit 4, welche sich formelmäßig wie folgt beschreiben lässt:

$$U \times I = I \times I \times R + c \times I \times 2 \times \pi \times n \text{ bzw.}$$

$$U = I \times R + c \times 2 \times \pi \times n$$

mit

U = 　Betriebsspannung in V (Volt)
I = 　Stromaufnahme in A (Ampere)
R = 　ohmscher Widerstand der Ankerwicklung in Ohm
c = 　Maschinenkonstante in Vs
n = 　Drehzahl pro Sekunde in 1/s

Hierbei beschreibt das Produkt U x I die elektrischen Leistungsaufnahme LA der Elektromotoreinheit 4 und das Produkt, wobei das Produkt I x I x R die elektrische Verlustleistung der Elektromotoreinheit 4 angibt und das Produkt c x I x 2 x $\pi$ x n die bereitgestellte mechanische Leistung angibt, die sich ihrerseits aus mechanischer Verlustleistung wie zum Beispiel Reibung, Luftwiderstand usw. und der tatsächlich abgreifbaren mechanischen Nutzleistung zusammensetzt. Bei der Maschinenkonstante c handelt es sich um einen maschinenspezifischen Parameter der jeweiligen Elektromotoreinheit 4.

Insbesondere setzt sich die Betriebsspannung U aus der in der Elektromotoreinheit 4 induzierten Gegenspannung Ui und der wirkenden Spannung Uw zusammen, wobei die wirkende Spannung Uw dem Produkt I x R entspricht. Die induzierte Gegenspannung Ui lässt sich damit formelmäßig wie folgt beschreiben:

$$Ui = U - Uw = U - I \times R = c \times 2 \times \pi \times n$$

Damit ist die induzierte Gegenspannung Ui proportional zu Drehzahl n der Elektromotoreinheit 4.

Somit kann aus der aktuellen Stromaufnahme I und der vorgegebenen Betriebsspannung U bei bekannten Widerstand R der Ankerwicklung die induzierte Gegenspannung Ui bestimmt werden, welche direkt proportional zur Drehzahl n ist.

Zur Ermittlung der aktuellen elektrischen Leistungsaufnahme LA kann damit beispielsweise die Drehzahl der Elektromotoreinheit 4 ermittelt und ausgewertet werden, und zwar vorzugsweise mittels einer in Wirkverbindung mit der Elektromotoreinheit 4 stehenden, in den Figuren nicht dargestellten Drehzahlsensoreinheit oder beim Betrieb der Elektromotoreinheit 4 mittels einer pulsweitenmodulierten Betriebsspannung U durch Ermittlung und Auswertung einer in den Auszeiten von der Elektromotoreinheit 4 erzeugten Gegenspannung.

Unter einer Massagebewegung des Massagegerätes 1 wird im Sinne der Erfindung abhängig von der Ausführungsvariante des Massagegerätes 1 die Bewegung und/oder Verformung und/oder Vibration der in direkten oder indirekten Wirkverbindung mit der Elektromotoreinheit 4 stehenden Wandung 7 verstanden, welche durch das erfindungsgemäße Verfahren gesteuert wird. Hierbei wird ausgehend von einer Grundintensität entsprechend dem aktuellen Massageverhalten des Benutzers die Intensität der Massagebewegung des verwendeten Massagegerätes 1 entweder erhöht oder erniedrigt, und zwar stufenartig oder kontinuierlich. Bei entsprechender Reduzierung der durch den Benutzer erzeugten mechanischen Krafteinwirkung K kann beispielsweise die Identität der Massagebewegung durch die erfindungsgemäße Steueranordnung 8 auch wieder reduziert werden.

Zur Steuerung der in den Figuren 1 bis 4 dargestellten Massagegeräte 1 mit jeweils einer Elektromotoreinheit 4 umfassenden Antriebseinrichtung ist die Steueranordnung 2 derart ausgebildet, dass gemäß dem in Figur 5 dargestellten Schaltplan zumindest eine Mikrokontrollereinheit 12 mit vorzugsweise integrierter Speichereinheit vorgesehen ist. In der Mikrokontrollereinheit 12 wird eine Steuerroutine SR ausgeführt, welche zur Steuerung der Intensität der Massagebewegung des Massagegerätes 1 eingerichtet ist. Zum Betrieb der Mikrokontrollereinheit 12 sind deren Spannungseingänge 12.1, 12.2 über die Schaltmittel 11 mit der Energieversorgungseinheit 9 verbunden. Die Mikrokontrollereinheit 12 weist ferner einen Messeingang 12.3 und einen Steuerausgang 12.4 auf.

Mittels einem der Elektromotoreinheit 4 vorgeschalteten Messwiderstand 13 wird die aktuelle Stromaufnahme der Elektromotoreinheit 4 in Form der am Messwiderstand 13 abfallenden Messspannung $U_M$ gemessen und am Messeingang 12.3 der Mikrokontrollereinheit 12 geführt. Ggf. ist eine zusätzliche Verstärkung der Messspannung $U_M$ mittels einer Operationsverstärkereinheit vorgesehen. Die Messspannung $U_M$ ist direkt proportional zu der von der Elektromotoreinheit 4 aufgenommenen elektrischen Leistung.

Abhängig von der am Mikrokontrollereinheit 12 anliegenden Messspannung $U_M$ erfolgt eine Steuerung der am Steuerausgang 12.4 abgegebenen Steuerspannung Us. Im vorliegenden Ausführungsbeispiel wird durch die Mikrokontrollereinheit 12 die Steuerspannung Us in Form eines pulsweitenmodulierten Spannungssignals abgegeben, welches über eine Tiefpassschaltung 14 in eine Gleichspannung gewandelt wird. Die Tiefpassschaltung 14 umfasst hierbei eine an sich bekannte Schaltungskonfiguration aus einem Widerstand und einer zugehörigen Kapazität.

Alternativ kann durch die Mikrokontrollereinheit 12 unmittelbar am Steuerausgang 12.4 eine Steuerspannung Us in Form einer Gleichspannung erzeugt werden. Die Steuerspannung Us liegt am Eingang einer Verstärkerschaltung 15 an, über welche die erzeugte Steuerspannung Us in einem vorgegebenen Verhältnis verstärkt wird und die Betriebsspannung U der Elektromotoreinheit 4 bildet. Die Verstärkerschaltung 15 umfasst im vorliegenden Ausführungsbeispiel einen Operationsverstärker 18 sowie zumindest einen ersten und zweiten Widerstand 16, 17. Die Einstellung der Verstärkung der Verstärkerschaltung 15 erfolgt im vorliegenden Ausführungsbeispiel durch eine entsprechende Dimensionierung des ersten und zweiten Widerstandes 16, 17 zur Beschaltung des Operationsverstärkers 18. Die vorliegende Ausführungsvariante zeigt beispielhaft eine "nicht-invertierende" Verstärkerschaltung 15.

In einer alternativen, nicht in den Figuren dargestellten Ausführungsvariante kann die von der Mikrokontrollereinheit 12 am Steuerausgang 12.4 abgegebene pulsweitenmodulierte Steuerspannung Us über eine geeignete Transistorschaltung in die Betriebsspannung U umgesetzt werden. Hierbei ist beispielsweise einem vorgegebenen Betriebsmodus BM1, BM2 ein vorgegebener Wert der Betriebsspannung U zugeordnet. Alternativ kann einem vorgegebenen An- zu Ausverhältnis der pulsweitenmodulierte Steuerspannung Us ebenfalls ein vorgegebener Wert der Betriebsspannung U zugeordnet sein.

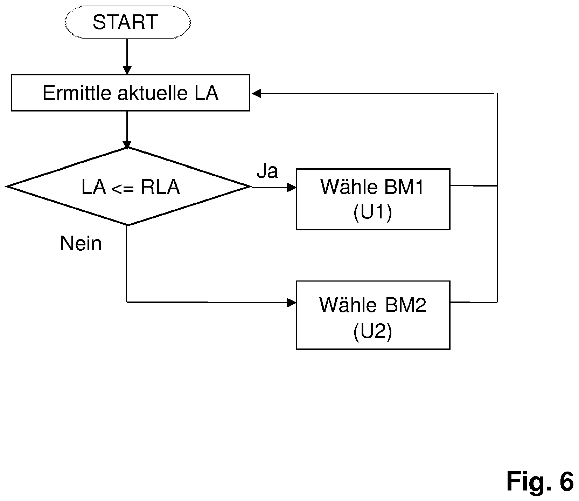

Figur 6 zeigt beispielsweise ein vereinfachtes Flussdiagramm einer möglichen Realisierung der Steuerroutine SR zur Steuerung der Intensität der Massagebewegung des Massagegerätes 1. Nach dem Anschalten des Massagegerätes 1 wird zunächst die Steuerroutine SR gestartet und die Elektromotoreinheit 4 in einem vorgegebenen Startbetriebszustand gesteuert. Hierzu wird von der Steuerroutine SR zumindest ein vorgegebener Referenzleistungswert RLA aus der Speichereinheit geladen. Im Anschluss daran wird die aktuelle elektrische Leistungsaufnahme LA der Elektromotoreinheit 4 periodisch oder kontinuierlich ermittelt. Die Ermittlung der elektrischen Leistungsaufnahme LA erfolgt beispielsweise anhand der aktuellen Stromaufnahme der Elektromotoreinheit 4. Im Anschluss daran wird die ermittelte elektrische Leistungsaufnahme LA der Elektromotoreinheit 4 mit dem Referenzleistungswert RLA verglichen. Unterschreitet die ermittelte elektrische Leistungsaufnahme LA den vorgegebenen Referenzleistungswert RLA oder stimmen diese überein, so wird die Elektromotoreinheit 4 in einem ersten Betriebmodus BM1 mit einer vorgegebenen ersten Betriebsspannung U1 betrieben. Überschreitet die ermittelte elektrische Leistungsaufnahme LA den vorgegebenen Referenzleistungswert RLA, dann wird die Elektromotoreinheit 4 in einem zweiten Betriebsmodus BM2 mit einer vorgegebenen zweiten Betriebsspannung U2 betrieben, wobei die zweite Betriebsspannung U2 größer als die erste Betriebsspannung U1 ist. Zusätzlich kann ein in Figur 6 nicht dargestellter weiterer Referenzleistungswert vorgesehen sein, bei dem vom zweiten Betriebsmodus BM2 wieder in den ersten Betriebsmodus BM1 zurückgeschaltet wird. Auch können mehr als zwei Betriebsmodi BM1, BM2 vorgesehen sein, wobei jeweils einem Betriebsmodus BM1, BM2 zumindest zwei unterschiedliche Referenzleistungswert RLA zugeordnet sind und abhängig davon die einzelnen Betriebsmodi BM1, BM2 geschaltet werden. Beispielsweise kann bei drei unterschiedlichen Betriebsmodi im ersten Betriebsmodus BM1 durch das Massagegerät 1 eine niedrige Massageintensität, im zweiten Betriebsmodus BM2 eine mittlere Massageintensität und im dritten Betriebsmodus ein hohe Massageintensität bereitgestellt werden. Durch jeweils den unterschiedlichen Betriebsmodi BM1, BM2 individuell zugeordnete Referenzleistungswert RLA werden die Grenzwerte für einen Wechsel zwischen den jeweiligen Betriebsmodi BM1, BM2 festgelegt. Damit weist jeder Betriebsmodus BM1, BM2 einen individuell zugeordneten Regelparametersatz auf.

Durch eine entsprechende Erhöhung oder Erniedrigung der Betriebsspannung U wird die Intensität der Massagebewegung abhängig von der aktuellen elektrischen Leistungsaufnahme LA gesteuert. Gemäß der Erfindung können in der Steuerroutine SR auch noch weitere Betriebsmodi vorgesehen sein. Durch die vorgegebenen Betriebsmodi BM1, BM2 sind die zum Betrieb der Elektromotoreinheit 4 erforderlichen Betriebsparameter, insbesondere die Betriebsspannungen U, U1, U2 vorzugsweise bereits vorgegebenen. Selbstverständlich kann eine beliebige Anzahl von derartigen Betriebsmodi BM1, BM2 bereits hinterlegt sein oder individuell durch den Benutzer selbst programmiert werden.

Es versteht sich, dass unterschiedliche Massagemuster und/oder vorgegebene Massageprogramme auch Teil derartiger Betriebsmodi BM1, BM2 sein können, die in der Speichereinheit hinterlegt werden und welche abhängig von der Vorgabe des Benutzers und/oder der jeweils vorliegenden elektrischen Leistungsaufnahme LA auswählbar sind. Beispielsweise kann bei Überschreitung eines vorgegebenen Leistungswertes für eine vorgegebene Zeitdauer ein speziell hierfür abgestimmtes Vibrationsprogramm und/oder eine spezielle Abfolge von Bewegungsmustern durch das Massagegerät 1 erzeugt werden. Auch können beispielsweise die bei Benutzung erzielten Maximalwerte gespeichert werden, um den Massage bzw. Trainingserfolg zu dokumentieren. Diese können dem Benutzer anhand der der Displayeinheit 10 angezeigt werden. Ebenfalls ist eine Erstellung von benutzerindividuellen Massagemuster und/oder Massageprogramme durch den Benutzer selbst möglich, die dieser in der Speichereinheit der Mikrokontrollereinheit 12 oder einer zusätzlichen Speichereinheit speichern kann.

In einer weiteren Ausführungsvariante der Erfindung kann abhängig von der elektrischen Leistungsaufnahme einer ersten Elektromotoreinheit 4 die Intensität der Massagebewegung einer zweiten, nicht in den Figuren dargestellten Elektromotoreinheit geregelt werden und zwar durch Änderung der Betriebsparameter der zweiten Elektromotoreinheit 4.

Auch kann zur Ermittlung der elektrischen Leistungsaufnahme LA der effektive Innenwiderstand der Elektromotoreinheit 4 bestimmt werden oder bei einer Ansteuerung der Elektromotoreinheit 4 mittels eines pulsweitenmodulierten Spannungssignals in den Zeiten, in denen keine Spannungsamplitude anliegt, die durch die Elektromotoreinheit 4 induzierte Spannung ermittelt werden und durch dessen Auswertung oder durch eine Auswertung der Drehzahl der Elektromotoreinheit 4 die elektrische Leistungsaufnahme der Elektromotoreinheit 4 bestimmt werden.

In einer alternativen Ausführungsvariante kann das Massagegerät noch zumindest eine weitere Elektromotoreinheit (nicht in den Figuren dargestellt) aufweisen, die abhängig vom Betriebszustand der ersten Elektromotoreinheit 4 gesteuert wird, und zwar abhängig von dessen aktueller Leistungsaufnahme LA. Hierbei kann zur Steuerung der Intensität der Massagebewegung des Massagegerätes 1 entweder nur jeweils eine Elektromotoreinheit oder mehrere Elektromotoreinheiten nach dem erfindungsgemäßen Verfahren gesteuert werden, d.h. abhängig von der Leistungsaufnahme der einen Elektromotoreinheit 4 die Betriebsparameter dieser und/oder zumindest einer weiterer Elektromotoreinheit zur Steuerung der Intensität der Massagebewegung des Massagegerätes 1 geregelt werden.

Auch kann die periodisch oder kontinuierlich ermittelte elektrische Leistungsaufnahme LA der Elektromotoreinheit 4, d.h. die zugehörigen Messwerte in der Speichereinheit abgespeichert werden. Damit können diese beispielsweise erneut ausgewertet werden und/oder zur Auswertung über eine geeignete Schnittstelle an einen Personal Computer übertragen werden.

Ein Massagegerät 1 gemäß der Figur 2 kann beispielsweise zum Training des Beckenbodens des Anwenders verwendet werden, wobei unter dem Beckenboden der bindegewebig-muskulöse Boden der Beckenhöhle bei Menschen oder Tieren verstanden wird. Hierbei wird durch die Wandung 7 der Massageabschnittes 7 des Massagegerätes 1 mit einem Vibrationsmuster beaufschlagt, vorzugsweise eine Folge von kurzzeitigen und längeren Vibrationsimpulsen ähnlich einem Morsecode. Durch Anspannung der Beckenbodenmuskulatur durch den Anwender wird diesen Vibrationsimpulsen entgegengewirkt, was zu einem Trainingseffekt der Bodenmuskulatur führt.

Auch kann eine Fernbedienungseinheit vorgesehen sein, welche entweder drahtlos oder drahtgebunden mit der Steueranordnung 8 verbindbar ist und über welche die Steueranordnung 8 bzw. das Massagegerät 1 fernbedienbar sind. Vorzugsweise erfolgt die Datenübertragung mittels eine Funkschnittstelle, und zwar beispielsweise WLAN, Bluetooth etc..

Auch können mehrere Massagegeräte 1 über eine Datenschnittstelle die jeweiligen Betriebsdaten austauschen und die Intensität der Massagebewegung des einen Massagegerätes 1 vom Betriebszustand des jeweils anderen Massagegerätes geregelt werden, und zwar unter Verwendung des erfindungsgemäßen Verfahrens.

Ist die Energieversorgungeinheit 9 durch eine Batterieeinheit oder eine Akkueinheit gebildet, so kann der Spannungsabfall oder die aktuell bereitgestellte Spannung dessen ebenfalls zur Ermittlung der aktuellen Leistungsaufnahme LA der Elektromotoreinheit 4 ausgewertet werden.

Es versteht sich, dass die zuvor genannten Regelkriterien beliebig kombiniert werden können, so könnte zur Ermittlung der aktuellen elektrischen Leistungsaufnahme LA die aktuelle Stromaufnahme der Elektromotoreinheit 4 und/oder der effektive Innenwiderstand der ersten Elektromotoreinheit 4 ermittelt und/oder die Drehzahl der Elektromotoreinheit 4 und/oder der Spannungsabfall oder die die aktuell bereitgestellte Spannung der Batterieeinheit oder der Akkueinheit ermittelt und ausgewertet wird.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

**Bezugszeichenliste**

| | |
|---|---|
| 1 | Massagegerät |
| 1' | freies Ende |
| 2 | Vibratoreinheit |
| 3 | Gehäuse |
| 4 | Elektromotoreinheit |
| 4' | Unwuchtelement |
| 5 | Antriebswelle |
| 6 | Massageabschnitt |
| 7 | Wandung |
| 8 | Steueranordnung |
| 9 | Energieversorgungseinheit |
| 10 | Anzeigemittel |
| 11 | Schaltmittel |
| 12 | Mikrokontrollereinheit |
| 12.1, 12.2 | Spannungseingang |
| 12.3 | Messeingang |
| 12.4 | Steuerausgang |
| 13 | Messwiderstand |
| 14 | Tiefpassschaltung |
| 15 | Verstärkerschaltung |
| 16 | erster Widerstand |
| 17 | zweiter Widerstand |
| 18 | Operationsverstärker |

| | |
|---|---|
| U | Betriebsspannung |
| U1 | erste Betriebsspannung |
| U2 | zweite Betriebsspannung |
| $U_M$ | Messspannung |
| $U_S$ | Steuerspannung |
| L | Längsachse |
| SR | Steuerroutine |
| LA | Leistungsaufnahme |
| RLA | Referenzleistungswert |

**Patentansprüche**

1. Massagegerät (1) mit einer Steueranordnung (8) zur Steuerung der Intensität der Massagebewegung umfassend zumindest einen vorzugsweise länglichen Massageabschnitt (6) mit zumindest einer die Außenfläche des Massageabschnittes (6) bildenden Wandung (7) und zumindest einer elektrischen Antriebseinrichtung, wobei die Antriebseinrichtung eine Elektromotoreinheit (4) aufweist, die zur Erzeugung einer Massagebewegung zumindest abschnittsweise direkt oder indirekt mit der Wandung (7) in Wirkverbindung steht, wobei zur Steuerung der Intensität der Massagebewegung die Steueranordnung (8) mit der Elektromotoreinheit (4) verbunden ist und wobei die Steueranordnung (8) ausgelegt ist, als Massagebewegung die Intensität der Bewegung und/oder Verformung und/oder Vibration der in direkten oder indirekten Wirkverbindung mit der Elektromotoreinheit (4) stehenden Wandung (7) die aktuelle elektrische Leistungsaufnahme (LA) der zumindest einen Elektromotoreinheit (4) periodisch oder kontinuierlich zu ermitteln und die ermittelte elektrische Leistungsaufnahme (LA) mit zumindest einer vorgegebenen Referenzleistungsaufnahme (RLA) zu vergleichen und abhängig vom Vergleichsergebnis die Intensität der Massagebewegung zu steuern, wobei hierbei ausgehend von einer Grundintensität entsprechend dem aktuellen Massageverhalten des Benutzers die Intensität der Massagebewegung erhöht oder erniedrigt wird, und zwar stufenartig oder kontinuierlich.

2. Massagegerät nach Anspruch 1, **dadurch gekennzeichnet, dass** die Steueranordnung (8) ausgelegt ist, die Änderung der elektrischen Leistungsaufnahme (LA), die durch die bei der Massage entstehende direkte oder indirekte mechanische Krafteinwirkung (K) auf die Elektromotoreinheit (4) hervorgerufen wird, zur Bestimmung der Änderung der Intensität der Massagebewegung auszuwerten.

3. Massagegerät nach Anspruch 1 oder 2, **dadurch gekennzeichnet, dass** die Steueranordnung (8) ausgelegt ist, zur Steuerung der Intensität der Massagebewegung abhängig vom Vergleichergebnis der ermittelten elektrischen Leistungsaufnahme (LA) mit der zumindest einen vorgegebenen Referenzleistungsaufnahme (RLA) zumindest ein Betriebsparameter der zumindest einen Elektromotoreinheit (4) zu ändern.

4. Massagegerät nach Anspruch 3, **dadurch gekennzeichnet, dass** die Steueranordnung (8) ausgelegt ist, als Betriebsparameter die Amplitude einer durch eine Gleichspannung gebildeten Betriebsspannung (U) der Elektromotoreinheit (4) zu erhöhen oder zu erniedrigen.

5. Massagegerät nach Anspruch 3, **dadurch gekennzeichnet, dass** die Steueranordnung (8) ausgelegt ist, als Betriebsparameter das An- zu Ausverhältnis einer pulsweitenmodulierten Betriebsspannung (U) der Elektromotoreinheit (4) zu ändern.

6. Massagegerät nach einem Ansprüche 1 bis 5, **dadurch gekennzeichnet, dass** die Steueranordnung (8) ausgelegt ist, zur Ermittlung der aktuellen elektrischen Leistungsaufnahme (LA) die aktuelle Stromaufnahme der Elektromotoreinheit (4) zu ermitteln.

7. Massagegerät nach einem der Ansprüche 1 bis 6, **dadurch gekennzeichnet, dass** die Steueranordnung (8) ausgelegt ist, zur Ermittlung der aktuellen elektrischen Leistungsaufnahme (LA) den effektiven Innenwiderstand der Elektromotoreinheit (4) zu ermitteln und auszuwerten.

8. Massagegerät nach einem der Ansprüche 1 bis 7, **dadurch gekennzeichnet, dass** die Steueranordnung (8) ausgelegt ist, zur Ermittlung der aktuellen elektrischen Leistungsaufnahme (LA) die Drehzahl der Elektromotoreinheit (4) zu ermitteln und auszuwerten.

9. Massagegerät nach Anspruch 8, **dadurch gekennzeichnet, dass** die Steueranordnung (8) ausgelegt ist, die Drehzahl der Elektromotoreinheit (4) über eine in Wirkverbindung mit der Elektromotoreinheit (4) stehende Drehzahlsensoreinheit zu ermitteln oder zur Ermittlung der aktuellen elektrischen Leistungsaufnahme (LA) beim Betrieb der Elektromotoreinheit (4) mittels einer pulsweitenmodulierten Betriebsspannung (U) in den Auszeiten die von der Elektromotoreinheit (4) erzeugte Gegenspannung zu ermitteln und zur Bestimmung der Drehzahl auszuwerten.

10. Massagegerät nach einem der Ansprüche 1 bis 8, **dadurch gekennzeichnet, dass** die Steueranordnung (8) ausgelegt ist, abhängig vom Vergleichsergebnis die Elektromotoreinheit (4) in einem der ermittelten elektrischen Leistungsaufnahme (LA) zugeordneten Betriebsmodus (BM1, BM2) von mindestens zwei Betriebsmodi (BM1, BM2) zu betreiben, wobei einem Betriebsmodus (BM1, BM2) zumindest eine an diesen angepasste Referenzleistungsaufnahme (RLA) zugeordnet ist und/oder dass die Steueranordnung (8) ausgelegt ist, bei einer Energieversorgung des Massagegerätes (1) mittels einer Batterieeinheit oder einer Akkueinheit den Spannungsabfall oder die aktuell bereitgestellte Spannung der Batterieeinheit oder der Akkueinheit zur Ermittlung der aktuellen Leistungsaufnahme (LA) der Elektromotoreinheit (4) auszuwerten.

11. Massagegerät einem der Ansprüche 1 bis 10, **dadurch gekennzeichnet, dass** die Steueranordnung (8) eine Verstärkerschaltung (15) zur Steuerung der Intensität der Massagebewegung des Massagegerätes (1) aufweist und/oder dass die Steueranordnung (8) eine Mikrokontrollereinheit (12) zur Ausführung einer Steuerroutine (SR) zur Steuerung der Intensität der Massagebewegung eines Massagegerätes (1) aufweist.

12. Massagegerät nach einem der Ansprüche 1 bis 11, **dadurch gekennzeichnet, dass** die Steueranordnung (8) zumindest eine vorzugsweise drahtlose Datenschnittstelle, beispielsweise eine Funkdatenschnittstelle zum Austauch von Betriebsdaten und zur davon abhängigen Steuerung der Intensität der Massagebewegung eines weiteren Massagegerätes (1) aufweist.

**Claims**

1. A massage device (1) with a control assembly (8) for controlling the intensity of the massage movement comprising at least one preferably elongated massage section (6) with at least a wall (7) forming the outer surface of the massage section (6) and at least an electric drive mechanism, wherein the drive mechanism includes an electric motor unit (4), which is operatively connected at least in sections directly or indirectly to the wall (7) for the generation of a massage movement, wherein, in order to control the intensity of the massage movement, the control assembly (8) is connected to the electric motor unit (4) and wherein the control assembly (8) is designed to determine the intensity of the movement and/or deformation and/or vibration of the wall (7) operatively connected directly or indirectly to the electric motor unit (4) as a massage movement the current electric power consumption (LA) of the at least one electric motor unit (4) periodically or continuously and to compare the determined electric power consumption (LA) with at least one predetermined reference power consumption (RLA) and, as a function of the result of the comparison, to control the intensity of the massage movement, wherein the intensity of the massage movement is increased or decreased starting from a basic intensity corresponding to the current massage behaviour of the user, namely by degrees or continuously.

2. Massage device according to claim 1, **characterized in that** the control assembly (8) is designed to evaluate the change in electric power consumption (LA) caused by the direct or indirect mechanical force (K) acting on the electric motor unit (4) during the massage in order to determine the change in intensity of the massage movement.

3. Massage device according to claim 1 or 2, **characterized in that** the control assembly (8) is designed to change at least one operating parameter of the at least one electric motor unit (4) in order to control the intensity of the massage movement as a function of the result of the comparison of the determined electric power consumption (LA) with the at least one predetermined reference power consumption (RLA).

4. Massage device according to claim 3, **characterized in that** the control assembly (8) is designed to increase or decrease the amplitude of an operating voltage (U), constituted by a direct voltage, of the electric motor unit (4) as an operating parameter.

5. Massage device according to claim 3, **characterized in that** the control assembly (8) is designed to change the on/off ratio of a pulse-width modulated operating voltage (U) of the electric motor unit (4) as an operating parameter.

6. Massage device according to one of claims 1 to 5, **characterized in that** the control assembly (8) is designed to determine the current electric power consumption of the electric motor unit (4) in order to determine the current electric power consumption (LA).

7. Massage device according to claims 1 to 6, **characterized in that** that control assembly (8) is designed to determine and evaluate the effective internal resistance of the electric motor unit (4) in order to determine the current electric power consumption (LA).

8. Massage device according to one of claims 1 to 7, **characterized in that** the control assembly (8) is designed to determine and evaluate the rotational speed of the electric motor unit (4) in order to determine the current electric power consumption (LA).

9. Massage device according to claim 8, **characterized in that** the control assembly (8) is designed to determine the rotational speed of the electric motor unit (4) via a rotational-speed sensor unit operatively connected to the electric motor unit (4) or, in order to determine the current electric power consumption (LA) when the electric motor unit (4) is operated by means of a pulse-width modulated operating voltage (U), to determine the reverse voltage generated by the electric motor unit (4) in the off states and to evaluate the same in order to determine the rotational speed.

10. Massage device according to one of claims 1 to 8, **characterized in that** the control assembly (8) is designed to operate, as a function of the result of the comparison, the electric motor unit (4) in an operating mode (BM1, BM2), of at least two operating modes (BM1, BM2), associated with the determined electric power consumption (LA), wherein at least one respectively adjusted reference power consumption (RLA) is associated with an operating mode (BM1, BM2) and/or **in that** the control assembly (8) is designed, when energy is supplied to the massage device (1) by means of a battery unit or an accumulator unit, to evaluate the voltage drop or the currently provided voltage of the battery unit or accumulation unit in order to determine the current power consumption (LA) of the electric motor unit (4).

11. Massage device according to one of claims 1 to 10, **characterized in that** the control assembly (8) includes an amplifier circuit (15) for controlling the intensity of the massage movement of the massage device (1) and/or **in that** the control assembly (8) includes a microcontroller unit (12) for executing a control routine (SR) for controlling the intensity of the massage movement of a massage device (1).

12. Massage device according to one of claims 1 to 11, **characterized in that** the control assembly (8) includes at least one preferably wireless data interface, for example a radio data interface for exchanging operating data and for controlling, as a function of the latter, the intensity of the massage movement of a further massage device (1).

**Revendications**

1. Appareil de massage (1), pourvu d'un ensemble de commande (8), destiné à commander l'intensité du mouvement de massage, comprenant au moins une partie massante (6), de préférence oblongue pourvue d'au moins une paroi (7) formant la surface extérieure de la partie massante (6) et d'au moins un système d'entraînement électrique, le système d'entraînement comportant une unité de moteur électrique (4), qui pour générer un mouvement de massage, est en liaison active directe ou indirecte, au moins par endroits avec la paroi (7), pour commander l'intensité du mouvement de massage, l'ensemble de commande (8) étant connecté avec l'unité de moteur électrique (4) et pour commander en tant que mouvement de massage, l'intensité du mouvement et/ou la déformation et/ou la vibration de la paroi (7) qui est en liaison active directe ou indirecte avec l'unité de moteur électrique (4), l'ensemble de commande (8) étant conçu pour déterminer périodiquement ou en continu la puissance électrique absorbée (LA) actuelle de l'au moins une unité de moteur électrique (4) et pour comparer la puissance électrique absorbée (LA) déterminée avec au moins une puissance absorbée de référence (RLA) prédéfinie et en fonction du résultat de la comparaison, pour commander l'intensité du mouvement de massage, à cet effet, sur la base d'une intensité de base correspondant au comportement de massage actuel de l'utilisateur, l'intensité du mouvement de massage étant augmentée ou abaissée et à savoir graduellement ou en continu.

2. Appareil de massage selon la revendication 1, **caractérisé en ce que** l'ensemble de commande (8) est conçu pour évaluer la variation de la puissance électrique absorbée (LA), qui est provoquée par l'action d'une force (K) mécanique directe ou indirecte résultant du massage sur l'unité de moteur électrique (4), pour déterminer la variation de l'intensité du mouvement de massage.

3. Appareil de massage selon la revendication 1 ou 2, **caractérisé en ce qu'**afin de commander l'intensité du mouvement de massage, l'ensemble de commande (8) est conçu pour faire varier au moins un paramètre de service de l'au moins une unité de moteur électrique (4) en fonction du résultat comparatif de la puissance électrique absorbée (LA) déterminée avec l'au moins une puissance absorbée de référence (RLA) prédéfinie.

4. Appareil de massage selon la revendication 3, **caractérisé en ce que** l'ensemble de commande (8) est conçu pour augmenter ou pour abaisser, en tant que paramètre de service l'amplitude d'une tension de service (U) de l'unité de moteur électrique (4) constituée d'une tension continue.

5. Appareil de massage selon la revendication 3, **caractérisé en ce que** l'ensemble de commande (8) est conçu pour faire varier, en tant que paramètre de service le rapport arrêt à marche d'une tension de service (U) modulée en largeur d'impulsion de l'unité de moteur électrique (4).

6. Appareil de massage selon l'une quelconque des revendications 1 à 5, **caractérisé en ce qu'**afin de déterminer la puissance électrique absorbée (LA) actuelle, l'ensemble de commande (8) est conçu pour déterminer la puissance absorbée de l'unité de moteur électrique (4).

7.  Appareil de massage selon l'une quelconque des revendications 1 à 6, **caractérisé en ce qu'**afin de déterminer la puissance électrique absorbée (LA) actuelle, l'ensemble de commande (8) est conçu pour déterminer et évaluer la résistance interne effective de l'unité de moteur électrique (4).

8.  Appareil de massage selon l'une quelconque des revendications 1 à 7, **caractérisé en ce qu'**afin de déterminer la puissance électrique absorbée (LA) actuelle, l'ensemble de commande (8) est conçu pour déterminer et évaluer la vitesse de rotation de l'unité de moteur électrique (4).

9.  Appareil de massage selon la revendication 8, **caractérisé en ce que** l'ensemble de commande (8) est conçu pour déterminer le vitesse de rotation de l'unité de moteur électrique (4) par l'intermédiaire d'un capteur de vitesse de rotation qui est en liaison active avec l'unité de moteur électrique (4) ou pour la détermination de la puissance électrique absorbée (LA) actuelle lors du fonctionnement de l'unité de moteur électrique (4), pour déterminer pendant les pauses au moyen d'une tension de service (U) modulée en largeur d'impulsion la tension antagoniste générée par l'unité de moteur électrique (4) et pour l'évaluer, pour la détermination de la vitesse de rotation.

10. Appareil de massage selon l'une quelconque des revendications 1 à 8, **caractérisé en ce que** l'ensemble de commande (8) est conçu pour faire fonctionner, en fonction d'un résultat comparatif l'unité de moteur électrique (4) dans un mode de fonctionnement (BM1, BM2) associé à la puissance électrique absorbée (LA) déterminée parmi au moins deux modes de fonctionnement (BM1, BM2), à un mode de fonctionnement (BM1, BM2) étant associée au moins une puissance absorbée de référence (RLA) adaptée à celui-ci et/ou **en ce que** lors d'une alimentation en énergie de l'appareil de massage (1) au moyen d'un module de batterie ou d'un module d'accu, l'ensemble de commande (8) est conçu pour évaluer la chute de tension ou la tension actuellement mise à disposition par le module de batterie ou le module d'accu, pour déterminer la puissance électrique absorbée (LA) actuelle du module de moteur électrique (4).

11. Appareil de massage selon l'une quelconque des revendications 1 à 10, **caractérisé en ce que** l'ensemble de commande (8) comporte un circuit amplificateur (15), destiné à commander l'intensité du mouvement de massage de l'appareil de massage (1) et/ou **en ce que** l'ensemble de commande (8) comporte un module de microcontrôleur (12), destiné à réaliser une routine de commande (SR), pour commander l'intensité du mouvement de massage d'un appareil de massage (1).

12. Appareil de massage selon l'une quelconque des revendications 1 à 11, **caractérisé en ce que** l'ensemble de commande (8) comporte au moins une interface de données, de préférence sans fil, par exemple une interface de données radio, pour l'échange de données de service et pour la commande dépendante de celui-ci de l'intensité du mouvement de massage d'un appareil de massage (1) supplémentaire.

Fig. 1

Fig. 2

Fig. 3

Fig. 4

**Fig. 5**

EP 2 903 582 B1

Fig. 6

**EP 2 903 582 B1**

**IN DER BESCHREIBUNG AUFGEFÜHRTE DOKUMENTE**

**In der Beschreibung aufgeführte Patentdokumente**

- EP 2364687 A1
- US 20090306467 A1
- DE 200050475 U1